# EUROPEAN PATENT SPECIFICATION

(11) **EP 0 330 634 B1**
(45) Date of publication and mention of the grant of the patent: **13.04.1994**
(21) Application number: 89850033.5
(22) Date of filing: 06.02.1989
(51) Int. Cl.: F16F 9/46

(54) **Shock absorber arrangement**
Stossdämpferanordnung
Adaptation d'amortisseur de chocs

(30) Priority: 22.02.1988 SE 8800602
(43) Date of publication of application: 30.08.1989
(73) Proprietor: ÖHLINS RACING AB, 194 27 Upplands Väsby (SE)
(72) Inventor: Öhlin, Kenth, S-191 48 Sollentuna (SE)
(74) Representative: Karlsson, Berne

(56) References cited:
- EP-A- 0 016 666
- WO-A-85/04698

## Description

The present invention relates to a shock absorber for bringing about in a shock absorber different kinds of damping characteristics, which are determinable with controls, independently of variations in any parameter(s) which seek to change the set damping effects in undesirable manner. Such a parameter might be constituted by the piston speed which causes a variation depending upon the speed. The shock absorber is of the kind which comprises a piston/piston rod working in a medium in the cylinder of the shock absorber. The shock absorber, moreover, works with a servo function, in which a first valve element carries out determination of the size of a restriction in a principal medium flow between the upper and lower sides of the piston depending on a first pressure produced by means of a pilot flow (pilot medium flow) running between the aforementioned upper and lower sides which is determinable with a second valve element controllable by the aforementioned controls.

It is previously known to utilize a hydraulic amplifier arrangement in association with electronically controllable shock absorbers, which means that control of a restriction which determines the damping effect can be carried out with proportionately small control signals. Small mass can thus be used in the element controlling the function, which means that the system as such can work with small inductances, which is a pre-requisite for a case in which quick changes in the damping characteristic are to be carried out. Reference is made to application PCT/SE85/00120 (WO 85/04698), which relates to an arrangement which permits change(s) in the damping characteristic during one and the same piston stroke.

In certain cases there is a requirement for applications in which the control function for the damping characteristics of the shock absorber can be simplified while maintaining high demands on the controllable damping function. So it must be possible, for example, to obtain uniform damping effects within the whole adjustment range by simple setting by means of potentiometers, pressure in a suspension system, speed monitoring elements, injection pumps etc. It must also be possible to carry out adjustment steplessly if so desired.

In another cases it is desirable to be able by means of electronic control to vary the shock-absorbing capacity of the shock absorber. The variation shall in this case be capable of taking place at even high speed, which presupposes a high speed of data transmission from the control unit to the shock absorber, and accordingly the latter shall be capable, for example, of varying its shock-absorbing characteristic several times during one and the same piston stroke. The control unit may consist of a microcomputer, and the shock absorber can also operate with a feed back circuit, by a width parameter data (the position, speed and direction of movement, etc., of the piston) are fed back to the control unit to be utilized in its control of the shock absorber.

In addition, there is a requirement that it be possible to give the shock absorber a technically simple and reliable construction. It must not be possible, for example, for variations in existing parameters, such as the piston speed, to influence the set damping characteristic. It must be possible for the arrangement to function with small controls/control signals, i.e. with the above-mentioned amplifier/servo function.

According to the idea of the invention the problems stated above are in an embodiment solved by the functions which determine the damping characteristic working with two combined adjustment systems, one system which is operated with the controls for the aforementioned pilot flow and one self-regulating system for the principal medium flow. In another embodiment a unic proportional magnet/solenoid is proposed by the invention.

In the main, what can be considered as being characteristic of the new shock absorber is, among other things, that the first valve element comprises a member, preferably in the form of a movable slide, the position of which is in every instance of control counterbalanced by the aforementioned first pressure produced by means of the pilot flow and a second pressure originating from the pressure difference existing between the upper and lower sides of the piston. A further characteristic is that the second valve element includes or interacts with a proportional magnet which influences, for example holds constant, the first pressure independently of the aforementioned variation in the aforementioned parameters (piston speed).

Preferably a movable member in the form of a springloaded pressure-operated slide is used. The spring force of the spring used acts on the member/slide in the same direction as a first force on the member/slide caused by the first pressure. Thus the member/slide is counterbalanced by a force, which is composed of the aforementioned spring force and the aforementioned first force, and a second force on the member/slide which is caused by the second pressure.

In a preferred embodiment the member/slide is exposed to the first and second pressures via its end surfaces and is provided with a lateral recess for conduct of the principal medium flow in both directions. Preferably the slide is provided with a channel which connects the pressure spaces for the first and second pressures and via which the aforementioned pilot flow runs in the respective direction from the pressure space for the second presure, to the pressurespace for the first pressure. The second valve element preferably works towards a seat in a passage between the pressure space for the first pressure and a further space which is connected via first and second check valves with the upper and lower sides of the piston. The aforementioned space for the aforementioned second pressure is connected with the upper and lower sides of the piston via third and fourth check valves. In this manner a pilot flow running from the upper side of the piston to its lower side acts via the third check valve, the channel in the member/slide, the seat passage and the second check valve. The pilot flow from the lower side of the piston to its upper side is conducted via the fourth check valve, the channel in the member/slide, the seat passage and the first check valve.

A control/electric control signal supplied to the proportional magnet brings about an acting armature force, referred to here as third force, in the armature of the proportional magnet. The aforementioned third force is directed towards a fourth force caused by the pilot flow on the second valve element. The pilot flow is counterbalanced by the aforementioned first pressure and the second valve element is pressed at the seat towards the pilot flow by the armature force.

With the new arrangement it is preferable that uniform damping effects are obtained within the entire adjustment range which can be large with regard to the piston speed parameter, for which a range of 0.05-4.00 m/sec, for example, can be obtained. The control unit used for controlling the shock absorber can be comparatively simply constructed. Preferably, stepless control is used within the adjustment range.

It is possible through what is proposed above to make precise adjustments to the pressure acting on the unit (membrane). In this way the counter-acting force is proportional to the control signal, independently of, or dependently in a predetermined fashion on the position of the valve element. The control signal can thus be given a constant valve for each shock-absorbtion setting, without the need to resort to any compensation of the control signal value dependent on the variation in an actual parameter. A certain control signal quantity (flow) preferably produces a certain difference in pressure corresponding to this quantity between the lower and upper sides of the piston, irrespective of the piston speed, that is to say the amplifier arrangement (hydraulic amplifier arrangement) used operates preferably in such a way as to maintain the pressure difference constant for every adjustment value (control signal value). It is, in actual fact, possible to cause the force which actuates the unit (the membrane) to vary so that the self-regulating function of the proportional magnet dependent on the pressure is utilized for the purpose of modifying the shock-absorption characteristic (for example harder shock-absorption at a higher piston speed).

A for the moment proposed embodiment of an arrangement which displays the significant characteristics of the invention is described below with simultaneous reference to the attached drawings in which
- figure 1: shows in vertical section and in principle a piston provided with elements for control of the damping characteristic, where the piston is arranged in a partly shown shock absorber cylinder, is provided with a partly shown piston rod and is connected to a further control unit for generating control signals for the aforementioned elements,
- figure 2: shows in vertical section, in principle and in englarged form parts of figure 1, where the acting medium flow paths and forces are given,
- figure 3: shows in diagram form force and piston speed curves for different sizes of the control signal within the adjustment range,
- figure 4,: shows in partially sectioned view a second embodiment of a shock absorber with an associated control unit of the microcomputer type,
- figure 5,: shows in vertical section parts of a piston included in the shock absorber in accordance with Fig. 4, and
- figure 6,: shows in diagrammatic form the position of a valve element included in the shock absorber according to Figs. 4 and 5, dependent on an actuating force or an actuating pressure, and at different values of the electrical control signal.

The shock absorber as such can have a basic construction known per se, for example that which is reproduced in the aforementioned PCT application. The piston and cylinder of the shock absorber are designated 1 and 2 respectively. The piston 1 is provided with an internal recess/drilling 3. The piston works in a medium, for example hydraulic oil or similar fluid or emulsion of gas/fluid. The pressure on the upper side 1a of the piston has been designated P1 and the pressure on the lower side 1b of the piston has been designated P2. The piston is provided with channel sections 4a, 4b for a main medium flow between the aforementioned upper and lower sides. The piston is also provided with channel sections 5a, 5b, 5c, 5d for a pilot medium flow between the aforementioned upper and lower sides. The latter channel sections are connected to the channel sections 4a, 4b, but may alternatively run directly into the aforementioned upper and lower sides. The piston is sealed against the cylinder wall with sealing elements in known manner. The piston consists of two or more sections joined together via dividing line D, at which the piston sections are joined together in known manner, with screws, adhesive etc. The aforementioned channels, which for the sake of clarity are shown in a common plane, are located in the practical embodiment example in different vertical sections through the piston. The dividing line has therefore not been drawn in full.

In the space 3 a first valve element 7 and a second valve element 8 are arranged. The first valve element is in the form of a spring-loaded pressure-operated slide which in the embodiment example is dynamically balanced. The slide works between two spaces V1 and V2 which are variable by means of the slide and is shown in its lower end position. The latter is determinable with an element for determining the end position, for example a ring S which is permanently fixed in the inner wall of the piston. The space 3 is provided with a first fixed internal wall 9 which together with the slide end surface 7a delimits the spece V1. The bottom 3a of the space 3 delimits together with the slide end surface 7b the space V2. The slide is provided with an insertion hole 7c for a spring 10 which is inserted between the bottom of the insertion hole 7c and the aforementioned internal wall 9. The slide is provided with an opening 7d connected to the aforementioned insertion hole in order to obtain a connection/channel between the speces V1, V2.

The slide 7 is provided with an annular lateral recess 7e for the conduct in both directions, in accordance with the following, of the principal medium flow between the upper and lower sides 1a and 1b of the piston. The slide 7 also has a first restriction/restricting edge 7f.

The second valve element 8 is longitudinally movably mounted in a second fixed internal wall 11 in the space 3. The valve element works towards a seat 9a in the first fixed internal wall 9. The seat forms an integral part of a passage 9b in the wall 9. The passage 9b, via a second restriction 12 formed by the element 8 and the seat, connects the space V1 with a third space V3. The element 8 is in the form of a needle/pin (with 2-3 mm diameter, for example) and its end surface 8a has an area which is hereinafter referred to as the needle area.

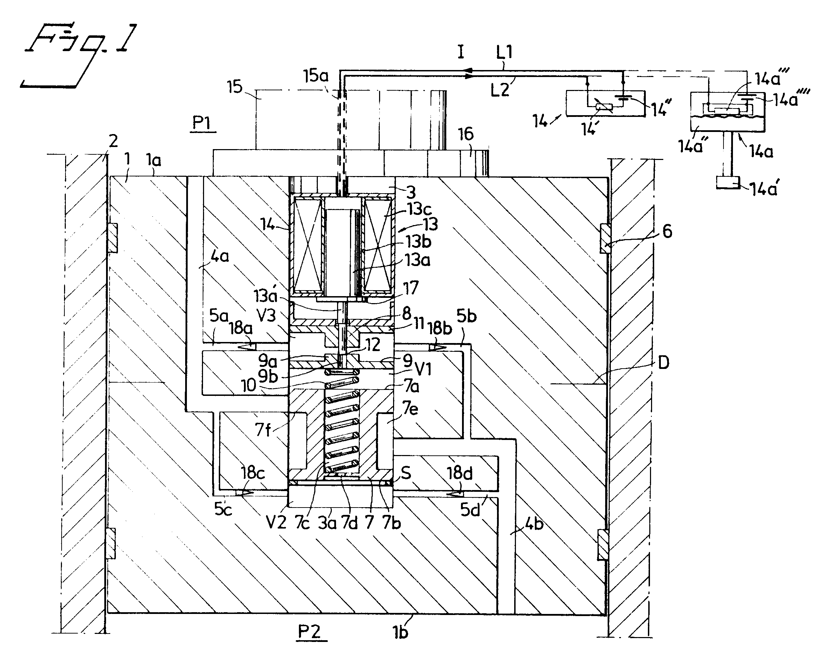

The valve element 8 forms an integral part of or interacts with a proportional magnet 13 which is arranged in the aforementioned space 3. The magnet includes an armature 13a′, with which the needle or pin 8 is connected or interacts. The interaction between armature and pin 8 takes place via a peg or contact part 13a′ on the armature. The magnet includes a winding case 13b and a winding 13c. The bobbin is surrounded by an iron cover 14 arranged to amplify the magnetic field which is produced by the proportional magnet when an electric signal I is supplied to the winding 13c. The control signal I is supplied via electrical conductors L1 and L2 which connect the windings to external control elements 14, 14a. The wires are arranged in a channel 15a inside the piston rod 15, which channel forms a gastight connection in relation to the surroundings of the shock absorber. The piston rod is fixed in the piston in known manner with threaded fixing elements 16. The transfer of wires between the movable piston and the fixed external connections for the wires L1 and L2 can be carried out in known manner. The mass in the needle and the armature is small and the proportional valve can work with small inductances and thus with quick changes in the control signal if so required. The armature 13a can be given a starting position defined by the stop 17, which position corresponds to the position according to figure 1. In this starting position the element has completely closed the seat 9a.

The control element 14, 14a can have a comparatively simple construction. With the control element 14, setting can be carrried out by means of a potentiometer 14′ which can be manually operable, controlled from a speedometer, injection pump etc. The control can be stepless. With 14a the control can be effected with a pressure, an air brake pressure for example, from a source 14a′ which, via a bellows 14a˝, operates an element 14a‴ which transforms pressure to electricity so that an electric signal corresponding to the respective pressure value is obtained. The electricity supply can come from an electricity supply source, for example a battery 14a′ or 14a˝˝ respectively.

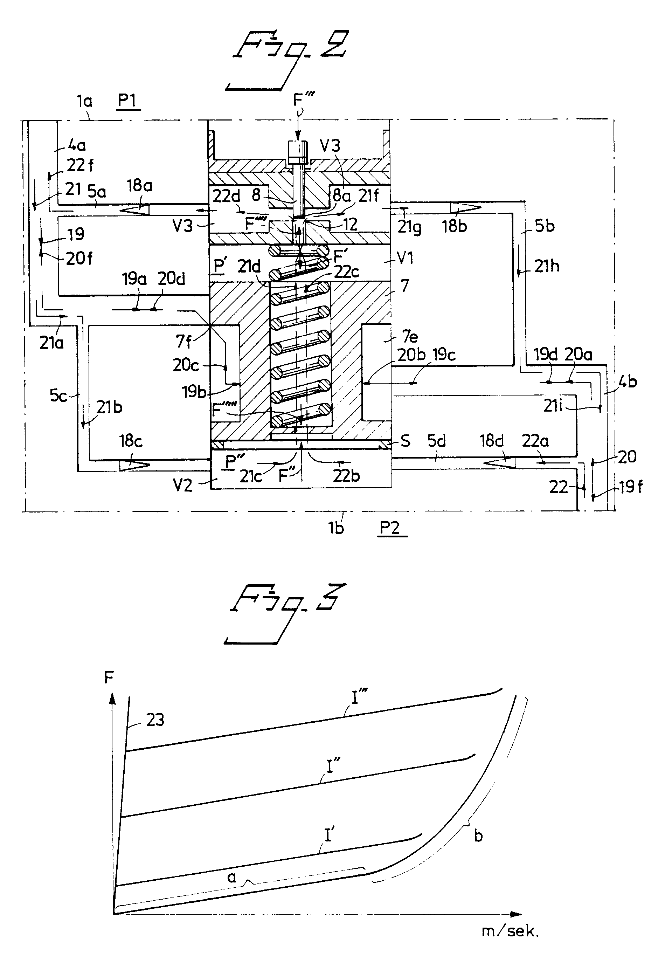

In the aforementioned pilot channel sections 5a, 5b, 5c and 5d check valves 18a, 18b, 18c and 18d respectively are arranged. According to figure 2 the principal medium flow can be conducted in the direction of the arrows 19a, 19b, 19c to 19f from the upper surface 1a to the lower surface 1b of the piston. The passage leads via the channel section 4a, the restriction 7f, the recess 7e and the channel section 4b. The principal medium flow can be conducted from the lower side 1b to the upper side 1a in the direction of the arrows 20, 20a, 20b to 20f, i.e. the opposite direction in relation to the direction given above.

The pilot flows are conducted along different routes. When the pressure P1 is higher than the pressure P2 a first pilot flow is conducted in the direction of the arrows 21, 21a, 21b to 21i. The passage in this case leads via the channel section 4a and into channel section 5c, via check valve 18c, the space V1, the thoroughfare in the slide 7, the restriction 12, the check valve 18b into the channel section 5b and further out into the channel section 4b. In a case where the pressure P2 is greater than the pressure P1 a second pilot flow is formed in the direction of the arrows 22, 22a, 22b to 22f. The passage in this case is via the channel section 4b and into the channel section 5d, the check valve 18d, the thoroughfare in the slide 7, the restriction 12, the space V3, the check valve 18a and into the channel section 5a and further out into the channel section 4a to the aforementioned upper side 1a.

In the space V1 there is a pressure P′ which is defined by the valve element 8 and which gives rise to a force F′ distributed along the end surface 7a. In the space V2 there is a pressure P˝ which is related to the pressure difference between the pressures P1 and P2 on the upper and lower sides of the piston. The pressure P˝ works towards the end surface 7b of the piston and produces a force F˝ which is distributed along the end surface 7b of the slide. The armature force in the proportional magnet which is caused by the control signal has been indicated as F‴. The respective pilot flow 21, 21a, 21b to 21i/22, 22a, 22b to 22f gives rise to a force F˝˝ which is directed towards the force F‴. The force F′ combines with the spring force F‴˝ and is directed towards the force F˝.

While the adjustment function is in progress the pressure P′ in the space V1 is determined by the ratio armature force F‴/area (needle area) of 8a. The proportional magnet provides the armature force determined by the set control signal I and furthermore allows its armature to be moved positionally in spite of the control signal supplied. The element 8 can thus carry out longitudinal movements, towards or away from the seat 9a, depending on changes in the pressure P′. When the pressure tends to increase or decrease, the element can move in a direction away from or towards the seat 9a respectively so that the pressure P′ assumes at all times a value which corresponds to the control signal. The pilot flow is thus at all times counterbalanced by the pressure P′ in the space V1. The element 8 (the armature) stands (or rides) on the pilot flow at the seat and is pressed towards the pilot flow by the armature force.

The above means that a variation in a shock absorber parameter (the piston speed, for example) can be overcome so that it is prevented from having undesirable effects on the damping functions. The adjustment functions can be arranged so that the damping functions remain independent of the parameter in question over the whole adjustment range or alternatively are dependent in a predetermined manner within the adjustment range.

A changed control signal, i.e. another value of control signal I, gives rise to a corresponding change in the ratio armature force F‴/needle area. The pressure P′ assumes a new value which corresponds to the change and which is then retained or changed in a predetermined manner within the whole adjustment range independent of variations in the parameter in question and so on.

The pressure P′ is also utilized for the servo function carried out with the slide 7. The position of the slide 7 is defined with the pressures P′ and P˝, the pressure P′ being settable in accordance with the above and P˝ being defined by the pressure difference existing between the upper and lower sides of the piston, i.e. by P1-P2 or P2-P1. The restriction 7f of the principal flow is dependent upon the position of the slide which is defined by the aforementioned pressures P′ and P˝.

A change in the piston speed, for example, results in tendencies to change in the pressure difference between the upper and lower sides of the piston and thus in the pressure P˝. The self-regulating function of the slide 7 causes the size of the restriction to be changed by means of movement of the slide. The change in the size of the restriction has the effect that the tendencies to change in the pressure difference between the upper and lower sides of the piston are counteracted and that the pressure P˝ is maintained at its assumed value. The aforementioned movement of the slide in the regulating function for the principal flow causes tendencies to change in the set pressure P′ in the space V1. The latter tendencies are counteracted in turn in the manner stated above and so on.

It is clear that the damping ability can be changed continuously with a varied control signal. The new arrangement can also work with rapid changes in the control signal. In lorries, for example, even heavy ones, it may be appropriate to increase the degree of shock absorption with increased speed and vice versa. The shock absorber can thus be controlled by a speed monitoring element on the vehicle. The shock absorption ability can also be changed according to the load, for example in buses and the like where control information can be gathered from air-controlled suspension. The new shock absorber can also be used in connections other than vehicles. The shock absorber can be used in different connections where vibrations of a mass are to be damped.

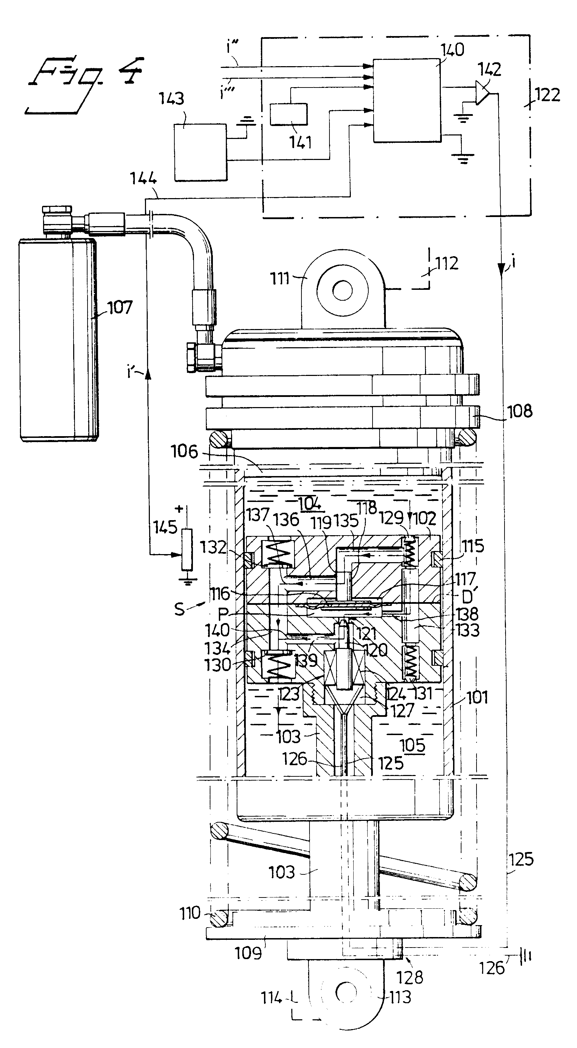

Figure 3 is intended to examplify damping characteristics within the adjustment range of the shock absorber. The adjustment range is limited by a straight line 23 in the left section of the range. This line exists as a result of leakage between piston and cylinder. The angle between the vertical line for the force F and the limiting line 23 has been shown as exaggeratedly large for the sake of clarity. At the bottom and towards the right the adjustment range is limited by a limiting line which is similarly exaggeratedly angled with a large angle with regard to the x axis and which includes a straight section a and a curved section b. The straight section is defined by the C constant in the spring 10. Section b is defined by saturation in the valve function. The curves show an example in which the restrictions 7f and 12 are influenced. According to the invention uniform damping characteristics are advantageously obtained within the adjustment range. The line I′ parallel to the limiting line shows damping characteristics which are obtained for a current of approximately 200 mA. The curves I˝ and I‴ correspond to control signal sizes of 400 mA and 600 mA respectively.

The adjustment range can be kept large with regard to the piston speed variations despite the obtained controllability of the shock absorber. The uniform damping characteristics of the shock absorber can, for example, be effective within a piston speed range as large as 0.05-4.00 m/sec.

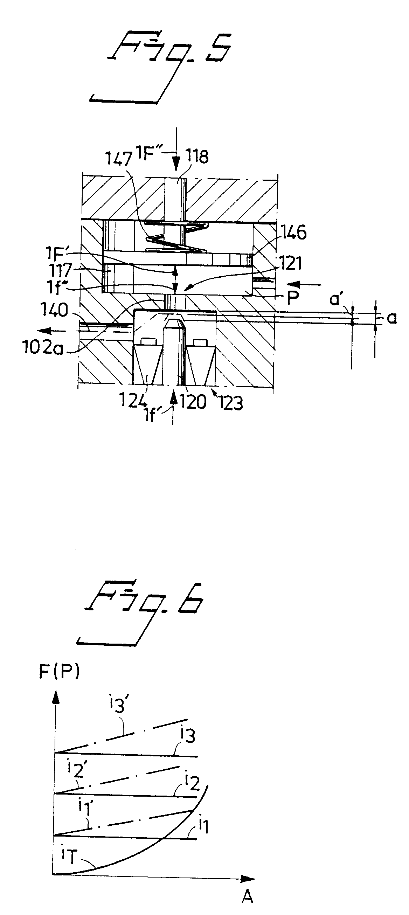

The shock absorber S illustrated in Figure 4 can have a basic construction of a previously disclosed nature, for example in accordande with the Öhlins "Gas-Shocks"® shock absorber sold on the open market. This shock absorber comprises, amongst other things, a cylinder 101 and a piston device 102 with a piston rod 103. The piston device 102 works in a first fluid, preferably hydraulic oil, which is thus present at the upper and lower surfaces 104 and 105 of the piston. The shock absorber illustrated here is of the kind which also comprises a floating piston 106, which separates the first fluid from a second fluid, preferably a gas. The shock absorber S is capable of connection in a previously disclosed fashion to an accumulator 107 (gas accumulator) for the second fluid. The cylinder 101 and the piston 102 are each provided with its own seating 108 and 109 for a compression spring (coil spring) 110. The cylinder is provided with attachment devices for its attachment to a chassis or equivalent unit, and the piston rod 103 is provided with an attachment 113 for its attachment to a wheel or some other device, the movement of which requires to be damped relative to the unit 112. The seating 109 follows the movements of the piston rod.

The piston 102 is sealed against the internal wall of the cylinder by means of sealing devices 115 of a previously disclosed kind. The piston is executed with a parting line D′, via which the two parts of the piston are capable of being joined together, for example by means of screws or adhesive, etc., (not shown here). The piston is executed with channels, via which a principal flow between the upper and lower sides 104 and 105 of the piston can be led. The piston is executed as a hydraulic amplifier arrangement, into which a pilot flow which moves alongside (parallel with) the principal flow between the upper and lower sides of the piston is capable of being led. The amplifier arrangement comprises a unit 116, which in the illustrative emdodiment is executed as a membrane arranged inside a chamber 117. The unit 116 is connected to a first valve device 118, by means of which the unit 116 determines the size of a variable restriction (throttle valve) 119 for the principal flow. The aforementioned first valve device is connected to or associated with the first side of the unit. The second side of the unit 116 is capable of being exposed to a pressure P generated inside the chamber 117 at the aforementioned second side by means of the pilot flow. The aforementioned pressure acts against a retaining pressure exerted by the unit.

The size of the pilot flow is determined by a second valve element 120, which determines the size of a variable second restriction (throttle valve) 121 depending on electrical control signals i obtained from a control unit 122 described in more detail below. The valve element is part of a proportional magnet which is designated in its entirety in Figure 1 by the designation 123 and comprises an electrical winding 124 with connecting wires 125 and 126, of which the first is connected to the control unit 122 and the second is earthed to the shock-absorber, or to the chassis or equivalent unit, etc. The valve element 120 has low mass, and the proportional magnet as a whole has small volume (5-10%) in relation to the total volume of the piston. The proportional magnet is arranged inside an internal space 127 in the piston and/or the piston rod. The later comprises an internal channel for the electrical wires 125, 126. The articulated outlet for the aforementioned electrical conductors is executed at the outlet 128 with lengths of wiring for the electrical conductors 125 and 126 such that movements of the shock absorber are permitted without damage to the wires. The proportional magnet 120 can be in the form of a previously disclosed unit.

For the purpose of producing the principal and pilot flows in both directions the piston is provided with two pairs of interacting check valve arrangements 129 and 130, and 131 and 132. The piston exhibits two parallel channel parts 133 and 134, at the ends of which the valve devices 129 and 131, and 130 and 132 are arranged. In a first transverse passageway 135, 136 between the channel parts 133 and 134 the principal flow 137 passes between the upper and lower sides of the piston via the restriction (throttle valve) 119. In a second transverse passageway 138, the chamber 117 and the transverse passageway 139, between the channel parts 133 and 134, the pilot flow 140 passes between the upper and lower sides of the piston via the restriction (throttle valve) 121. The valve devices 129 and 130 open for the principal and pilot flows when the pressure is higher on the upper side 104 compared with the pressure on the lower side 105. The check valves 131 and 132 are kept closed in this case. If, on the other hand, the pressure is higher on the lower side, the valves 131 and 132 are open, and the valves 129 an 130 closed.

The membrane 116 is clamped via its peripheral edge between the parts of the piston at the aforementioned parting line D′. The membrane divides the chamber 117 into two subsidiary chambers. The piston rod 103 is secured to the piston via an internal thread in conjunction with the space 127 for the proportional magnet 123.

The control unit 122 comprises a microcomputer 140 (for example, Motorola 6805®) with input and output circuits 141 and a power adaptation unit (amplifier) 142, at the output from which the control signal i is obtained. An electrical energy supply unit (for example, a battery) is designated by 143. The control unit 122 and the shock absorber operate on the principle of the feedback 144 of one or more shock absorber parameters, for example the piston position, the direction of movement of the piston, and the piston speed, etc. The feedback function is capable of being effected with the help of sensors of a previously disclosed kind for detecting one or more parameters (pressure and movement, etc., can be detected), and is symbolized in Figure 4 by a potentiometer 145. The signal from the sensors, or the feedback signal, is designated by i′. The control unit also produces its control signal depending on the incoming data i˝, i‴ from data generating devices (not shown here) in the vehicle or equivalent unit.

Examples of data generating devices are the transmission and the accelerator linkage of the vehicle, and the speed and inclination of the vehicle, etc.

The microcomputer comprises, amongst other things, a CPU and its associated memories, for example ROM and RAM memories. The ROM memory contains a program which controls the shock absorber depending on the aforementioned external and feedback data. The ROM memory can also include stored constants which contain the data required by the program for the control functions in question. The RAM memory is used for the random storage of calculation variables. The data transmission speed can also be high (for example, 100 000 bits per second, or faster).

The pressure P inside the chamber 117 on one side of the device 116 is determined by means of the signal i generated by the control unit 22. A first value for the control signal (for example, 100 mA) corresponds to a pressure P of a first level, and thus to a first setting of the restriction (throttle valve) 119. A second value for the control signali(for example, 200 mA) corresponds to a pressure P of a second level, and thus to a second setting of the restriction (throttle valve) 119, and so on. An external shock absorber parameter, for example the piston speed, may, however, result in the situation in which a parameter-dependent pressure difference will tend to be built up or to be reduced across the upper and lower surfaces of the piston, which pressure difference could influence the pilot flow and thus the level of the pressure P, which would no longer correspond to the value of the set control signal. The proportional magnet (solenoid) is accordingly executed with a self-regulating function through its valve element 120 being adjustable depending on the pressure P. By variation of the restriction (throttle valve) 121, the regulating function causes the pressure P to be maintained at a constant level or to vary in a predetermined fashion.

Figure 5 illustrates an alternative embodiment of the unit 116, which in this case has been replaced by a piston device 146 and a spring 147. The pressure P produces a force 1F′ against the piston 146, of which the return force for the spring 147 is indicated by 1F˝. The control force for the valve element produced by the control signal i is indicated by 1f′, whereas the counter-acting force on the valve element generated by the pressure P is indicated by 1f˝. The valve element 120 operates against a seat 102b, and with it forms the second restriction (throttle valve) 121. The pilot fluid flow thus passes the element 120 and gives rise to the aforementioned counter-acting force 1f˝ upon it. In an actual chronological phase the valve 123 activated by means of a control signal i, the present value of which is adjusted in the restriction (throttle valve) 121 to a value a, which corresponds to a given shock absorber capacity in the shock absorber. If the piston speed increases, the pressure difference across the piston 102 will increase, and the pressure P will increase. The valve element 120 in the magnet 123 is influenced by the change in the pressure (in the force 1f˝) and is displaced longitudinally to a distance a′, resulting in the pressure P (the force 1f˝) falling, and so on.

Figure 6 shows the distance/force diagram for the various control signal levels i₁_{,} i₂, i₃ in the form of solid horizontal lines. It can be seen from the solid curves that the valve element 120 produces a constant actuating force 1F for the unit 112 (146) at each actuation level. Dashed and dotted lines i₁′, i₂′and i₃′, which illustrate the case when the self-regulating function of the magnet 123 can be utilized in order to vary the shock-absorption capacity depending on the actual external parameters (piston speed). The solid curve i_{T} illustrates the distance/force diagram for conventional valves with one and the same positional adjustment for the valve element for one and the same flow i_{T}. A piston speed following a change in the setting of the valve element occurs here on the basis of a non-linearly increasing curve. In this case the londitudinal displacement depending on the piston speed must be varied by means of changes in the control signal, which causes difficulties due to manufacturing inaccuracies, etc., in the valve as such.

The invention is not limited to the embodiment given as an example above but can be subjected to modifications within the scope of the following patent claims.

## Claims

1. Shock-absorber including arrangement for variable shock-absorbing capacity by means of electrical control signals from a control unit (14, 14a) and including a cylinder (2) and a piston working in the cylinder in a medium, the shock-absorber operates with an amplifier/servo function in which a force (F') is generated by means of a pilot medium flow and the force (F') takes part in the control of a unit (7) which controls the size of a main medium flow between the upper and lower sides (1a, 1b) of the piston, said piston is provided with main channel for the main medium flow and the main channel having a first restriction, the piston is provided with pilot channel for the pilot medium flow and the pilot channel having a second restriction, the piston is provided with the unit which varies the main medium flow by variation of the first restriction and with a control device (13) allotted to the pilot channel and arranged to receive said control signals and vary the second restriction in dependence of the signals, the piston is provided with a space (V1) in which a pressure (P') is generated by means of the pilot medium flow in order to effect said force (F'), characterized in that the control device consists of a proportional magnet included in a self-regulating function for the pilot medium flow and having a valve element (8), in that the proportional magnet receives said control signals and in dependence of the signals effects a force (F'''), in that the piston is provided with a seat (9) against which the valve element operates, in that the valve element and the seat constitutes the variable second retriction for the pilot medium flow, which, when passing through the second restriction, causes a force (F'''') which counter-acts the force (F''') of the proportional magnet, in that the proportional magnet allows the displacement of the valve element in relation to the seat in spite of its generated force (F'''), whereby, for each control signal setting, said pressure (P') is kept to the same value or is changed in a predetermined way, even in the case a difference in pressure is built up between the upper and lower sides due to a variation in a shock-absorber parameter such as to produce an undesired disproportionate fluctuation in the pilot flow, in that the unit for varying the main flow is affected by said pressure (P') via one of its sides, and in that the last mentioned unit is included in a own self-regulating system, in which the unit by variation of the first restriction counter-acts said difference in pressure and with that an undersired disproportionate fluctuation in the main flow/dampening.

2. Shock-absorber according the claim 1, characterized in that the unit for varying the main flow having the form of a movable slide and is counterbalanced in every instance by said pressure (P), here mentioned as the first pressure, and a second pressure (P''), originating from the pressure difference (P1-P2 or P2-P1) existing between the upper and lower sides of the piston.

3. Shock-absorber according to claim 1 or 2, characterized in that an integral part of the counterbalancing function of the member/slide is a spring (10), the spring force (F''''') of which acts on the the member/slide in the same direction as a first force (F') caused by the first pressure (P'), in which connection the position of the member/slide is counter-balanced by a force, which is composed of the aforementioned spring force and the first force, and a second force (F'') which is caused by the second pressure (P'').

4. Shock-absorber according to claim 1, 2 or 3, characterized in that the member/slide is exposed to the first and second pressures (P', P'') via its end surfaces (7a or 7b respectively) and is provided with a lateral recess (7e) for couduct of the principal medium flow.

5. Shock-absorber according to any of claims 1, 2, 3 or 4, characterized in that the slide is provided with a channel (7c, 7d) which connects the pressure spaces (V1, V2) for the first and second pressures and via which the aforementioned pilot flow runs in the respective direction from the pressure space (V2) for the second pressure, to the pressure space (V1) for the first pressure.

6. Shock-absorber according to any of the previous claims, characterized in that the second valve element (8) works towards a seat (9a) in a passage (9b) between the pressure space for the first pressure and a further space (V3) which is connected via first and second check valves (18a, 18b) with the upper and lower sides of the piston respectively.

7. Shock-absorber according to any of the previous claims, characterized in that the space (V2) for the second pressure (P'') is connected with the upper and lower sides of the piston via third and fourth check valves (18c, 18d).

8. Shock-absorber according to any of claims 6 or 7, characterized in that a pilot flow running from the upper side of the piston to its lower side acts via the third check valve (18c), the channel (7c, 7d) in the member/slide, the seat passage (9a) and the second check valve (18b) and in that a pilot flow running from the lower side of the piston to its upper side acts via the fourth check valve (18d), the channel in the member/slide, the seat passage and the first check valve (18a).

9. Shock-absorber according to any of the previous claims, characterized in that a control/electric control signal (1) supplied to the proportional magnet (13) brings about an acting armature force/third force (F''') in the armature (13a) of the proportional magnet, which third force is directed towards a fourth force (F'''') caused by the pilot flow on the second valve element (8), in which connection the pilot flow is counterbalancd by the first pressure and the second element is pressed towards the pilot flow at the seat by the armature force.

10. Shock-absorber according to any of the previous claims, characterized in that uniform damping characteristics are obtained within the whole adjustment range which is large with regard to the piston speed parameter, 0.05-4.00 m/sec for example.

11. Shock-absorber according to any of the previous claims, characterized in that it is controllable by means of a control unit which is arranged for stepless control within the adjustment range.

12. Shock-absorber according to Patent Claim 2, characterized in that the proportional magnet (23) for each control signal value (i₁, i₂, i₃) maintains the aforementioned pressure at a constant level.

## Patentansprüche

1. Stoßdämpfer einschließlich Anordnung für veränderliche Stoßdämpfungsleistung mittels elektrischer Steuersignale aus einem Steuergerät (14, 14a) und einschließlich einem Zylinder (2) und einem Kolben, der in dem Zylinder in einem Medium arbeitet, der Stoßdämpfer arbeitet mit einer Verstärker-/Servofunktion, bei welcher eine Kraft (F') mittels eines Leitmediumflusses erzeugt wird, und die Kraft (F') beteiligt sich an der Steuerung eines Gerätes (7), das die Größe eines Hauptmediumflusses zwischen den Ober- und Unterseiten (1a, 1b) des Kolbens steuert, der genannte Kolben ist mit dem Hauptkanal für den Hauptmediumfluß versehen, wobei der Hauptkanal eine erste Verengung hat, der Kolben ist mit Leitkanal für den Leitmediumfluß versehen, wobei der Leitkanal eine zweite Verengung hat, der Kolben ist mit dem Gerät versehen, das den Hauptmediumfluß durch Veränderung der ersten Verengung verändert, und mit einer Steuereinrichtung (13), die dem Leitkanal zugeordnet und so angeordnet ist, daß sie die genannten Steuersignale empfängt und die zweite Verengung in Abhängigkeit der Signale verändert, der Kolben ist mit einem Raum (V1) versehen, in welchem ein Druck (P') mittels des Leitmediumflusses erzeugt wird, um die genannte Kraft (F') hervorzurufen, gekennzeichnet dadurch, daß die Steuereinrichtung aus einem Proportionalmagnet besteht, der in einer selbstregelnden Funktion für den Leitmediumfluß enthalten ist und ein Ventilelement (8) hat, dadurch, daß der Proportionalmagnet die genannten Steuersignale empfängt und in Abhängigkeit der Signale eine Kraft (F''') hervorruft, dadurch, daß der Kolben mit einem Sitz (9) versehen ist, in dessen Richtung das Ventilelement arbeitet, dadurch, daß das Ventilelement und der Sitz die veränderliche zweite Verengung für den Leitmediumfluß bilden, der, wenn er die zweite Verengung passiert, eine Kraft (F'''') verursacht, die der Kraft (F''') des Proportionalmagnets entgegenwirkt, dadurch, daß der Proportionalmagnet die Verschiebung des Ventilelements in bezug auf den Sitz trotz der erzeugten Kraft (F''') erlaubt, wodurch für jede Steuersignaleinstellung der genannte Druck (P') auf demselben Wert gehalten oder auf eine vorbestimmte Weise verändert wird, selbst im Falle, daß ein Differenzdruck zwischen den Ober- und Unterseiten infolge einer Veränderung eines Stoßdämpferparameters aufgebaut wird, so daß eine unerwünschte disproportionale Leitflußschwankung erzeugt wird, dadurch, daß das Gerät zur Veränderung des Hauptflusses durch den genannten Druck (P') über eine seiner Seiten beeinflußt wird, und dadurch, daß das letztgenannte Gerät in ein selbstregelndes System einbezogen ist, in welchem das Gerät dem genannten Differenzdruck durch Veränderung der ersten Verengung entgegenwirkt und damit einer unerwünschten disproportionalen Schwankung des Hauptflusses/Dämpfung.

2. Stoßdämpfer gemäß Anspruch 1, gekennzeichnet dadurch, daß das Gerät zur Veränderung des Hauptflusses die Form eines beweglichen Schiebers hat und in jedem Fall durch den genannten Druck (P), hier als der erste Druck bezeichnet, ausgeglichen wird, und einen zweiten Druck (P'), der aus dem Differenzdruck (P1-P2 oder P2-P1), welcher zwischen den Ober- und Unterseiten des Kolbens existiert, entsteht.

3. Stoßdämpfer gemäß Anspruch 1 oder 2, gekennzeichnet dadurch, daß ein integrales Bestandteil der Ausgleichsfunktion des Bauteils/Schiebers eine Feder (10) ist, deren Federkraft (F''''') auf das Bauteil/Schieber in derselben Richtung wie eine erste Kraft (F') wirkt, die durch den ersten Druck (P') verursacht wird, in welcher Verbindung die Position des Bauteils/Schiebers durch eine Kraft ausgeglichen wird, die sich zusammensetzt aus der vorgenannten Federkraft und der ersten Kraft sowie einer zweiten Kraft (F''), die durch den zweiten Druck (P'') verursacht wird.

4. Stoßdämpfer gemäß Anspruch 1, 2 oder 3, gekennzeichnet dadurch, daß das Bauteil/Schieber den ersten und zweiten Drükken (P', P'') über seine Stirnseiten (7a bzw. 7b) ausgesetzt wird und mit einer seitlichen Vertiefung (7e) zur Führung des Hauptmediumflusses versehen ist.

5. Stoßdämpfer gemäß irgendeinen der Ansprüche 1, 2, 3 oder 4, gekennzeichnet dadurch, daß der Schieber mit einem Kanal (7c, 7d) versehen ist, der die Druckräume (V1, V2) für die ersten und zweiten Drücke verbindet, und über welche der vorgenannte Leitfluß in die jeweilige Richtung vom Druckraum (V2) für den zweiten Druck und zum Druckraum (V1) für den ersten Druck fließt.

6. Stoßdämpfer gemäß irgendeinem der vorhergehenden Ansprüche, gekennzeichnet dadurch, daß das zweite Ventilelement (8) in Richtung eines Sitzes (9a) in einem Durchgang (9b) zwischen dem Druckraum für den ersten Druck und einem weiteren Raum (V3) arbeitet, der über erste und zweite Rückschlagventile (18a, 18b) mit den Ober- bzw. Unterseiten des Kolbens verbunden ist.

7. Stoßdämpfer gemäß irgendeinem der vorhergehenden Ansprüche, gekennzeichnet dadurch, daß der Raum (V2) für den zweiten Druck (P'') mit den Ober- und Unterseiten des Kolbens über dritte und vierte Rückschlagventile (18c, 18d) verbunden ist.

8. Stoßdämpfer gemäß irgendeinem der Ansprüche 6 oder 7, gekennzeichnet dadurch, daß ein Leitfluß, der von der Oberseite des Kolbens zu seiner Unterseite fließt, über das dritte Rückschlagventil (18c) den Kanal (7c, 7d) im Bauteil/Schieber, den Sitzdurchgang (9a) und das zweite Rückschlagventil (18b) wirkt, und dadurch, daß ein Leitfluß, der von der Unterseite des Kolbens zu seiner Oberseite fließt, über das vierte Rückschlagventil (18d), den Kanal im Bauteil/Schieber, den Sitzdurchgang und das erste Rückschlagventil (18a) wirkt.

9. Stoßdämpfer gemäß irgendeinem der vorhergehenden Ansprüche, gekennzeichnet dadurch, daß ein Steuersignal/elektrisches Steuersignal (1), das an den Proportionalmagnet (13) gesandt wird, eine wirkende Ankerkraft/dritte Kraft (F''') in dem Anker (13a) des Proportionalmagnets bewirkt, dessen dritte Kraft auf eine vierte Kraft (F'''') gerichtet ist, verursacht durch den Leitfluß am zweiten Ventilelement (8), in welcher Verbindung der Leitfluß durch den ersten Druck ausgeglichen und das zweite Element durch die Ankerkraft in Richtung des Leitflusses am Sitz gedrückt wird.

10. Stoßdämpfer gemäß irgendeinem der vorhergehenden Ansprüche, gekennzeichnet dadurch, daß einheitliche Dämpfungskenndaten innerhalb des gesamten Einstellbereichs erreicht werden, der in bezug auf den Kolbengeschwindigkeitsparameter groß ist, zum Beispiel 0,05-4,00 m/s.

11. Stoßdämpfer gemäß irgendeinem der vorhergehenden Ansprüche, gekennzeichnet dadurch, daß er mittels eines Steuergerätes regelbar ist, das zur stufenlosen Regelung innerhalb des Einstellbereichs angeordnet ist.

12. Stoßdämpfer gemäß Anspruch 2, gekennzeichnet dadurch, daß der Proportionalmagnet (23) für jeden Steuersignalwert (i₁, i₂, i₃) den vorgenannten Druck auf einem konstanten Niveau hält.

## Revendications

1. Amortisseur comprenant un ensemble à capacité variable d'absorption sous la commande de signaux électriques d'une unité (14, 14a) de commande et comprenant un cylindre (2) et un piston travaillant dans le cylindre dans un fluide, l'amortisseur travaillant avec une fonction d'amplificateur d'asservissement dans laquelle une force (F') est créée par un courant de fluide pilote et la force (F') participe à la commande d'une unité (7) qui règle l'amplitude d'un courant principal de fluide entre les côtés supérieur et inférieur (1a, 1b) du piston, le piston ayant un canal principal du courant principal de fluide et le canal principal ayant un premier rétrécissement, le piston ayant un canal pilote pour le courant de fluide pilote et le canal pilote ayant un second rétrécissement, le piston étant associé à l'unité qui fait varier le courant principal de fluide par variation du premier rétrécissement et à un dispositif de commande (13) affecté au canal pilote et destiné à recevoir les signaux de commande et à faire varier le second rétrécissement en fonction des signaux, le piston ayant un espace (V1) dans lequel une pression (P') est créée par le courant de fluide pilote afin que ladite force (F') soit créée, caractérisé en ce que le dispositif de commande est constitué d'un aimant proportionnel incorporé dans une fonction d'autorégulation du courant de fluide pilote et ayant un élément obturateur (8), en ce que l'aimant proportionnel reçoit les signaux de commande et, suivant les signaux, crée une force (F'''), en ce que le piston a un siège (9) contre lequel agit l'élément obturateur, en ce que l'élément obturateur et le siège constituent le second rétrécissement variable pour le courant de fluide pilote qui, lorsqu'il circule dans le second rétrécissement, provoque la création d'une force (F'''') qui est antagoniste de la force (F''') de l'aimant proportionnel, en ce que l'aimant proportionnel permet le déplacement de l'élément obturateur par rapport au siège malgré la force créée (F''') si bien que, pour chaque réglage de signal de commande, la pression (P') est maintenue à la même valeur ou est changée de manière prédéterminée, même dans le cas où une différence de pression s'accumule entre les faces supérieure et inférieure du fait d'une variation d'un paramètre d'amortisseur telle qu'une fluctuation disproportionnée indésirable du courant pilote est produite, en ce que l'unité destinée à faire varier le courant principal est affectée par la pression (P') par l'intermédiaire de l'un de ses côtés, et en ce que la dernière unité citée est incorporée à un ensemble d'autorégulation propre, dans lequel l'unité, par variation du premier rétrécissement, compense cette différence de pression et, grâce à celle-ci, une fluctuation disproportionnée indésirable de l'amortissement et du courant principal.

2. Amortisseur selon la revendication 1, caractérisé en ce que l'unité destinée à faire varier le courant principal a la forme d'un coulisseau mobile et est équilibrée dans tous les cas par ladite pression (P) indiquée comme la première pression, et une seconde pression (P'') provenant de la distance de pression (P1 - P2 ou P2 - P1) existant entre les faces supérieure et inférieure du piston.

3. Amortisseur selon la revendication 1 ou 2, caractérisé en ce qu'une partie intégrante de la fonction d'équilibrage de l'organe-coulisseau est un ressort (10), la force du ressort (F''''') agissant sur l'organe-coulisseau dans le même sens que la première force (F') due à la première pression (P'), et à cet égard, la position de l'organe-coulisseau est équilibrée par une force qui est composée de la force précitée du ressort et de la première force, et une seconde force (F'') qui est due à la seconde pression (P'').

4. Amortisseur selon la revendication 1, 2 ou 3, caractérisé en ce que l'organe-coulisseau est exposé à la première et à la seconde pression (P', P'') par ses surfaces d'extrémité (7a ou 7b respectivement) et a une cavité latérale (7e) destinée à conduire le courant principal de fluide.

5. Amortisseur selon l'une quelconque des revendications 1, 2, 3 ou 4, caractérisé en ce que le coulisseau a un canal (7c, 7d) qui raccorde les espaces (V1, V2) de pression destinés à la première et à la seconde pression et par lequel le courant pilote précité circule dans le sens respectif de l'espace de pression (V2) pour la seconde pression à l'espace de pression (V1) pour la première pression.

6. Amortisseur selon l'une quelconque des revendications précédentes, caractérisé en ce que le second élément obturateur (8) travaille vers un siège (9a) placé dans un passage (9b) compris entre l'espace de pression destiné à la première pression et un espace supplémentaire (V3) qui est raccordé par un premier et un second clapet de retenue (18a, 18b) aux faces supérieure et inférieure du piston respectivement.

7. Amortisseur selon l'une quelconque des revendications précédentes, caractérisé en ce que l'espace (V2) destiné à la seconde pression (P'') est raccordé aux faces supérieure et inférieure du piston par un troisième et un quatrième clapet de retenue (18c, 18d).

8. Amortisseur selon l'une des revendications 6 et 7, caractérisé en ce qu'un courant pilote circulant de la face supérieure du piston à sa face inférieure agit par l'intermédiaire du troisième clapet (18c), le canal (7c, 7d) de l'organe-coulisseau, le passage (9a) du siège et le second clapet (18b), et en ce qu'un courant pilote allant de la face inférieure du piston à sa face supérieure agit par l'intermédiaire du quatrième clapet (18d), du canal de l'organe-coulisseau, du passage du siège et du premier clapet (18a).

9. Amortisseur selon l'une quelconque des revendications précédentes, caractérisé en ce qu'un signal (1) de commande-électrique de commande transmis à l'aimant proportionnel (13) crée une force-troisième force agissant sur l'armature (F''') dans l'armature (13a) de l'aimant proportionnel, cette troisième force étant dirigée vers une quatrième force (F'''') due au courant pilote sur le second élément obturateur (8), et à cet égard, le courant pilote est équilibré par la première pression et le second élément est repoussé vers le courant pilote au niveau du siège par la force de l'armature.

10. Amortisseur selon l'une quelconque des revendications précédentes, caractérisé en ce que les caractéristiques uniformes d'amortissement sont obtenues dans toute la plage d'ajustement qui est large par rapport au paramètre de vitesse du piston, entre 0,05 et 4,00 m/s par exemple.

11. Amortisseur selon l'une quelconque des revendications précédentes, caractérisé en ce qu'il peut être commandé par une unité de commande qui est destinée à assurer une commande continue dans la plage d'ajustement.

12. Amortisseur selon la revendication 2, caractérisé en ce que l'aimant proportionnel (23) maintient la pression précitée à un niveau constant pour chaque valeur du signal de commande (i₁, i₂, i₃).
